# EUROPEAN PATENT APPLICATION

(11) **EP 4 432 413 A1**
(43) Date of publication of application: **18.09.2024**
(21) Application number: 22905495.2
(22) Date of filing: 07.09.2022
(51) Int. Cl.: H01M 10/0562, H01M 4/587, H01M 4/62, H01M 10/0585

(54) **SOLID ELECTROLYTE BATTERY AND METHOD FOR PRODUCING SOLID ELECTROLYTE BATTERY**

(30) Priority: 15.12.2021 JP 2021203234
(71) Applicant: Vehicle Energy Japan Inc., Ibaraki 312-8505 (JP)
(72) Inventor: YAMAMOTO, Yuki, Hitachinaka-shi, Ibaraki 312-8505 (JP); TACHIKAWA, Yusuke, Hitachinaka-shi, Ibaraki 312-8505 (JP)
(74) Representative: Manitz Finsterwald Patent- und Rechtsanwaltspartnerschaft mbB
(86) International application number: PCT/JP2022/033603
(87) International publication number: WO 2023/112405

(57) **Abstract**

The present invention addresses the problem of taking measures to a battery resistance increase associated with charge and discharge cycles with respect to a solid electrolyte battery. The configuration of the present invention is as described below. The present invention provides a solid electrolyte battery which comprises a positive electrode layer, a negative electrode layer and a solid electrolyte layer that is formed between the positive electrode layer and the negative electrode layer, and which is characterized in that: the negative electrode layer comprises a first negative electrode layer 1, and a second negative electrode layer 2 that is superposed on the first negative electrode layer 1 so as to be in contact with the solid electrolyte layer 3; the active material of the first negative electrode layer 1 is a crystalline carbon 11; the active material of the second negative electrode layer 2 is an amorphous carbon 21; a negative electrode layer solid electrolyte 32 is mixed into the first negative electrode layer 1 and the second negative electrode layer 2; and (average particle size (D50) of negative electrode layer solid electrolyte 32) < (average particle size (D50) of crystalline carbon 2) < (average particle size (D50) of amorphous carbon 1) is satisfied.

## Description

### Technical Field

The present invention relates to a secondary battery, and more particularly, to a solid electrolyte battery.

### Background Art

Lithium ion secondary batteries charged and discharged by storage and release of lithium ions at electrodes are widely used as high energy density batteries in various fields such as electric vehicles.

On the other hand, as the discharge capacity per unit weight or unit volume increases, security of safety becomes a problem, and as a battery capable of securing more excellent safety, a solid electrolyte battery has recently been developed. The solid electrolyte battery is a battery using a solid electrolyte instead of a liquid electrolyte. Since the solid electrolyte battery does not use a liquid electrolyte, even if the discharge capacity per unit weight or unit volume increases, there is little possibility of ignition, and the battery has high safety.

There are various problems to be addressed when putting solid electrolyte batteries into practical use. One of the problems is, for example, achieving both high capacity and long-term cycle durability. Patent Literature 1 is cited as a countermeasure for this problem. Patent Literature 1 discloses a multilayer negative electrode which is composed of a lower layer containing a graphite as a negative electrode active material and an upper layer containing a hard carbon as a negative electrode active material in a lithium ion secondary battery. On the other hand, in the solid electrolyte battery, there is a problem that a high confining pressure is required during charging and discharging in order to maintain an adhesion between a positive electrode layer, a solid electrolyte layer, and a negative electrode layer. Patent Literature 1 does not disclose the problem of the confining pressure.

### Citation List

### Patent Literature

[Patent Literature 1] Japanese Patent Application Laid-Open No. 2020-53142

### Summary of Invention

### Technical Problem

In a solid electrolyte battery using a graphite as the negative electrode active material, a mechanical strength at an interface with the bonded solid electrolyte layer decreases due to repeated expansion and contraction of the graphite during charging and discharging. As a result, a micro void is generated between the negative electrode layer and the solid electrolyte layer, and a homogeneous reactivity is lowered. When the homogeneous reactivity decreases, that is, when a reaction unevenness occurs, there is a problem that increase in a resistance of the battery due to a charge-discharge cycle becomes remarkable. In order to prevent this decrease in the homogeneous reactivity, charging and discharging are performed by being sandwiched between metal plates and being confined from the outside. When charging and discharging are performed by loosening the confining pressure, the decrease in the homogeneous reactivity, that is, the reaction unevenness is remarkably generated, and an increase in the resistance of the battery due to the charging and discharging cycle becomes remarkable. As a result, there is a problem that the durability of the battery is reduced.

### Solution to Problem

The present invention solves the above-described problems, and the main specific means are as follows. That is, a solid electrolyte battery, in which a positive electrode layer, a negative electrode layer, and a solid electrolyte layer between the positive electrode layer and the negative electrode layer are formed, the solid electrolyte battery being characterized in that: the negative electrode layer includes a first negative electrode layer, and a second negative electrode layer which is laminated on the first negative electrode layer and is in contact with the solid electrolyte layer, in which an active material of the first negative electrode layer is a crystalline carbon, an active material of the second negative electrode layer is an amorphous carbon, a negative electrode layer solid electrolyte is mixed into the first negative electrode layer and the second negative electrode, and (an average particle size (D50) of the negative electrode layer solid electrolyte) < (the average particle size (D50) of the amorphous carbon) < (the average particle size (D50) of the crystalline carbon) is satisfied.

### Advantageous Effects of Invention

By using the present invention, it is possible to obtain effects such as suppressing an increase in resistance after a charge-discharge cycle.

### Brief Description of Drawings

Figure 1 is a cross-sectional view of a solid electrolyte battery according to Example 1.
Figure 2 is a detailed sectional view of Figure 1.
Figure 3 is a cross-sectional view of a solid electrolyte battery according to Example 2.
Figure 4 is a table comparing configurations and performances of Example 1, Example 2 and Comparative Example.
Figure 5 is a cross-sectional view of Example 3 and is a schematic sectional view showing a state of applying a confining pressure to the solid electrolyte battery shown in Example 1 using a confining member.
Figure 6 is a plan view corresponding to Figure 6.
Figure 7 is a cross-sectional view of Comparative Example 2 and is a schematic sectional view showing a state of applying a confining pressure to the solid electrolyte battery shown in Comparative Example 1 using the confining member.
Figure 8 is a cycle test result showing a comparison of a durability of a solid electrolyte of Examples 3 and 4, and Comparative Examples 2 and 3.

### Description of Embodiments

Hereinafter, the present invention will be described in detail with reference to Examples.

### Example 1

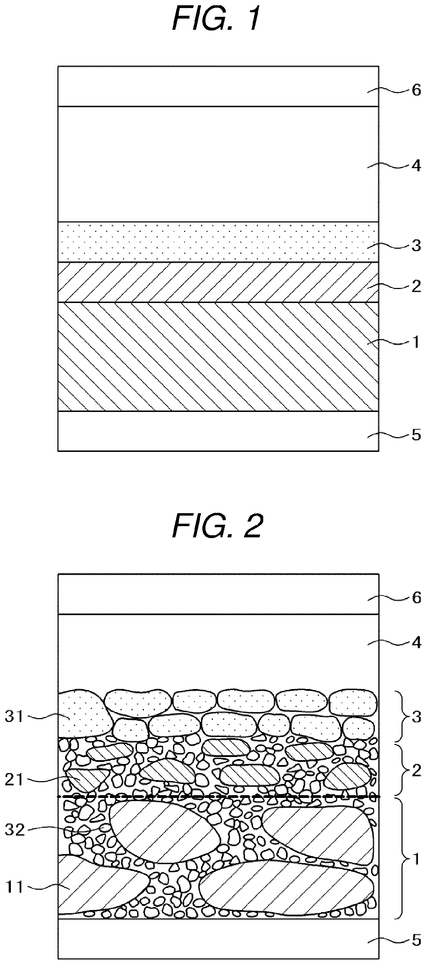

Figure 1 is a cross-sectional view of a lithium ion secondary battery which is a solid electrolyte battery according to Example 1. In Figure 1, the lithium ion secondary battery has a configuration in which a first negative electrode layer 1, a second negative electrode layer 2, a solid electrolyte layer 3, and a positive electrode layer 4 are laminated between a negative electrode current collector plate 5 and a positive electrode current collector plate 6. An active material of the first negative electrode layer 1 is a crystalline carbon 11, and an active material of the second negative electrode layer 2 is an amorphous carbon 21.

Figure 2 is a detailed cross-sectional view of Figure 1, and is a cross-sectional view illustrating details of the first negative electrode layer 1, the second negative electrode layer 2, and the solid electrolyte layer 3. In Figure 2, a dotted line between the first negative electrode layer and the second negative electrode layer is an imaginary line indicating a boundary between the first negative electrode layer and the second negative electrode layer. Although the specific configuration of Figure 2 will be described later, the operation of the configuration of Figure 2 is outlined as follows.

The second negative electrode layer adjacent to the electrolyte layer 3 includes amorphous carbon 21 having a smaller expansion and contraction due to insertion and desorption of lithium ions than the crystalline carbon 11. Thus, even when charging and discharging are repeated, the formation of voids between the negative electrode layer and the electrolyte layer can be suppressed, and high adhesion can be obtained. Furthermore, by having a negative electrode layer solid electrolyte 32 smaller than the amorphous carbon 21 or the crystalline carbon 11, the above-described adhesion can be obtained. That is, the high adhesion between the crystalline carbon 11 in the first negative electrode layer and its surroundings or the high adhesion between the amorphous carbon 21 in the second negative electrode layer and its surroundings can be obtained.

As shown in Figure 2, the first negative electrode layer 1 is composed of the crystalline carbon 11 and the negative electrode layer solid electrolyte 32. The active material of the first negative electrode layer 1 is the crystalline carbon 11, and is formed of, for example, a graphite. The graphite is a layered compound composed of a plurality of graphene layers, and Li ions are inserted or desorbed between the graphene layers. An average particle size (D50) of the crystalline carbons 11 is preferably about 30 um to 2 µm, for example, 16 um. Hereinafter, unless otherwise specified, the average particle size (D50) is referred to as an average particle size or simply as a particle size. The average particle size (D50) can be defined as a particle size corresponding to 50 % of a cumulative volume in a particle size distribution curve. The average particle size (D50) can be measured, for example, using a laser diffraction method. For example, the average particle size (D50) of the positive electrode active material can be measured by introducing it into a commercially available laser diffraction particle size distribution measuring apparatus, irradiating an ultrasonic wave, and then calculating the average particle size (D50) corresponding to 50 % of the cumulative volume of the measuring apparatus.

In Figure 2, the negative electrode layer solid electrolyte 32 which is a fine particle is filled between a graphite 11 which is the crystalline carbon 11. The average particle size of the negative electrode layer solid electrolyte 32 is, for example, 0.5 µm. That is, the average particle size of the negative electrode layer solid electrolyte 32 is less than the average particle size of the crystalline carbon 11. In addition, in Figure 2, a binder, a conductive auxiliary agent or a void are present in a blank portion of the first negative electrode layer 1. The same applies to the second negative electrode layer 2 and the like.

The particle size of the solid electrolyte 31 constituting the solid electrolyte layer 3 shown in Figure 2 is different from the particle size of the negative electrode layer solid electrolyte 32 mixed in the first negative electrode layer 1 and the second negative electrode layer 2. The material of the particles of the solid electrolyte 31 constituting the solid electrolyte layer 3 may be different from the material of the particles of the negative electrode layer solid electrolyte 32 mixed in the first negative electrode layer 1 and the second negative electrode layer 2. Hereinafter, for the sake of distinction, the electrolyte in the solid electrolyte layer 3 is referred to as a solid electrolyte 31, and the solid electrolyte filled in the first negative electrode layer 1 and the second negative electrode layer 2 is referred to as a negative electrode layer solid electrolyte 32.

A film thickness of the first negative electrode layer 1 is not particularly limited, but is set in a range of about 20 to 500 um depending on the required performance of the battery. It is 80 um in Example 1 and 48 um in Example 2.

In Figure 2, the second negative electrode layer 2 is composed of the amorphous carbon 21 and the negative electrode layer solid electrolyte 32. The active material of the second negative electrode layer 2 is the amorphous carbon 21, and a hard carbon is used, for example. The hard carbon is also referred to as "hardly graphitizable carbon", and is obtained, for example, by heat-treating a thermosetting resin such as a phenolic resin in an inert gas atmosphere. In the hard carbon, the number of graphene layers is small, and Li ions are inserted or desorbed not only between the graphene layers but also between the particles.

The average particle size of the hard carbon which is amorphous carbon 21 is in the range of 1 um to 20 µm, for example, 5 µm. The negative electrode layer solid electrolyte 32 mixed into the second negative electrode layer 2 is the same as the negative electrode layer solid electrolyte 32 mixed into the first negative electrode layer. That is, the average particle size of the negative electrode layer solid electrolyte 32 is, for example, 0.5 µm, which is smaller than the average particle size of the crystalline carbon 11. The average particle size of the amorphous carbon 21 is smaller than the average particle size of the crystalline carbon 11.

The thickness of the second negative electrode layer 2 is not particularly limited, but is set in a range of about 5 to 500 um depending on the required performance of the battery. However, when the second negative electrode layer 2 is thick, a battery capacity is reduced, and therefore, in order to maintain a high battery capacity, the thickness of the second negative electrode layer 2 is desirably 120 um or less. In Example 1, the thickness of the second negative electrode layer is 12 um, and in Example 2, the thickness of the second negative electrode layer 2 is 84 um.

In the case where the active material is the amorphous carbon 21, insertion and desorption of conductive ions from multiple directions is possible, and therefore, it is possible to improve input/output characteristics particularly at a high current density. In addition, expansion and contraction of the negative electrode layers due to insertion and desorption of Li ions can also be suppressed. On the other hand, since the amorphous carbon 21 is hard, there is a problem in that the contact resistance with the negative electrode layer solid electrolyte 32 increases. In contrast, in the present invention, the increase in the contact resistance is suppressed by making the average particle size of the negative electrode layer solid electrolyte 32 smaller than the average particle size of the amorphous carbon 21.

Incidentally, a soft carbon may be used as the amorphous carbon 21 used as the active material of the second negative electrode layer 2. The soft carbon is also referred to as "easily graphitizable carbon" and contains an amorphous portion, a turbulent layer structure, and a graphite-like structure. For example, it can be obtained by heat-treating a pitch-based carbon or a thermoplastic resin. In the following examples, an example in which a hard carbon is used as the amorphous carbon 21 is described, but similar performance can be obtained even when a soft carbon is used.

The solid electrolyte layer 3 is formed on the second negative electrode layer 2. In the solid electrolyte 31 used for the solid electrolyte layer 3, an oxide-based and a sulfide-based are present. Examples of the oxide-based solid electrolyte include Li7La3Zr2O12-Zr2O12 (LLZ), Li3BO3-Li2SO4, etc. Examples of the sulfide-based solid electrolyte include solid electrolytes of Li10GeP2S12 (LGPS) and Li6PS5Cl based (argyrodite).

In the present example, the Li6PS5Cl based (argyrodite) is used among the sulfide-based solid electrolytes which can reduce an electric resistance and are more favorable to the power-output property. However, the solid electrolyte 31 in the present invention is not limited to the Li6PS5Cl based (argyrodite), and the other solid electrolytes may be used. The thickness of the solid electrolyte layer 3 is, for example, 0.1 um to 300 µm, and preferably 10 um to 30 µm.

The solid electrolyte 31 constituting the solid electrolyte layer 3 is different from the negative electrode layer solid electrolyte 32 mixed with the first negative electrode layer 1 and the second negative electrode layer 2. In particular, as shown in Figure 2, the average particle size of the negative electrode layer solid electrolyte 32 is smaller than the average particle size of the solid electrolyte 31 constituting the solid electrolyte layer 3. However, the material may be the same for the solid electrolyte 31 and the negative electrode layer solid electrolyte 32. In Examples 1 and 2, the materials of the solid electrolyte 31 and the negative electrode layer solid electrolyte 32 are the same.

The features of the present invention described above are as follows. That is, (the average particle size of the crystalline carbon 11 as the active material of the first negative electrode layer 1) > (the average particle size of the amorphous carbon 21 as the active material of the second negative electrode layer 2) > (the average particle size of the negative electrode layer solid electrolyte 32 mixed in common with the first negative electrode layer 1 and the second negative electrode layer 2). Furthermore, there is a relation that (the average particle size of the solid electrolyte 31 constituting the solid electrolyte layer 3) > (the average particle size of the negative electrode layer solid electrolyte 32 mixed with the first negative electrode layer 1 and the second negative electrode layer 2).

Further, the present invention can be configured as follows in addition to the configuration described above. The first configuration is that the average particle size of the negative electrode layer solid electrolyte 32 of the first negative electrode layer 1 is smaller than the average particle size of the crystalline carbon 11, and is preferably 1/10 or less. According to this configuration, an adhesion between the crystalline carbon 11 constituting the active material in the first negative electrode layer 1 and the negative electrode layer solid electrolyte 32 disposed in the periphery thereof is improved. Even after a charge-discharge cycle, a decrease in the adhesion of the active material (for example, the crystalline carbon 11) due to the cycle of expansion and contraction can be suppressed, and an increase in a battery resistance can be suppressed. Further, it is possible to obtain effects such as suppression of generation of a lithium dendrite in a rapid charging.

The second configuration is that the average particle size of the negative electrode layer solid electrolyte 32 of the second negative electrode layer 2 is smaller than the average particle size of the amorphous carbon 21, and is preferably 1/10 or less. According to this configuration, the adhesion between the amorphous carbon 21 constituting the active material and the negative electrode layer solid electrolyte 32 disposed around the second negative electrode layer 2 is improved. Even after the charge-discharge cycle, a decrease in the adhesion of the active material (for example, the amorphous carbon 21) due to the cycle of expansion and contraction can be suppressed, and an increase in the battery resistance can be suppressed. Further, it is possible to obtain effects such as suppression of generation of the lithium dendrite in the rapid charging.

The third configuration is that the average particle size of the negative electrode layer solid electrolyte 32 of the second negative electrode layer 2 is smaller than the average particle size of the negative electrode layer solid electrolyte 32 of the first negative electrode layer 1. Since the second negative electrode layer 2 is close to the solid electrolyte layer 3, the reaction is more active. According to the third configuration, since the high adhesion between the active material 21 and the first negative electrode layer solid electrolyte 32 is obtained in the second negative electrode layer 2 in which the reaction is active, it is possible to obtain effects such as suppression of an increase in the battery resistance after the charge-discharge cycle and suppression of generation of the lithium dendrite in the rapid charging.

The fourth configuration is that the average particle size of the negative electrode layer solid electrolyte 32 of the second negative electrode layer 2 is smaller than the average particle size of the negative electrode layer solid electrolyte 32 of the first negative electrode layer 1. According to the fourth configuration, in the first negative electrode layer 1 having the crystalline carbon 11 having the expansion coefficient larger than that of the amorphous carbon 21, the high adhesion between the crystalline carbon 11 and the negative electrode layer solid electrolyte 32 can be obtained. As a result, it is possible to obtain effects such as suppression of an increase in the battery resistance after the charge-discharge cycle and suppression of generation of the lithium dendrite in the rapid charging.

Further, in addition to the configurations of 1 to 4, by disposing the first negative electrode layer 1 and the solid electrolyte layer 3 via the second negative electrode layer 2, it is possible to suppress a decrease in the adhesion of the interface between the first negative electrode layer 1 and the other layer due to the expansion and contraction, and it is possible to further suppress an increase in the electrical resistance. Alternatively, the average particle shape of the solid electrolyte 31 and the average particle shape of the negative electrode layer solid electrolyte 32 may be the same. According to this configuration, the cost-effective handling of the solid electrolyte is excellent. In addition, when forming a thin film of the solid electrolyte layer 3, it is easy to control the film thickness, and the manufacturability can be improved.

Thus, the present invention includes various forms. However, in the following description, the negative electrode layer solid electrolyte mixed with the first negative electrode layer 1 and the second negative electrode layer 2 is simply referred to as the negative electrode layer solid electrolyte 32 for the sake of clarity unless otherwise specified.

In the second negative electrode layer 2, the average particle size of the negative electrode layer solid electrolyte 32 is preferably 1/10 or less of the average particle size of the amorphous carbon 21. If it is 1/10 or less, the negative electrode layer solid electrolyte 32 is easily disposed on the outer edge of the relatively large amorphous carbon 21, and the contact resistance between the negative electrode layer solid electrolyte 32 and the amorphous carbon 21 can be reduced. The average particle size of the negative electrode layer solid electrolyte 32 can be reduced to about 0.1 µm.

In the following example, since the average particle size of the negative electrode layer solid electrolyte 32 is 0.5 um and the average particle size of the amorphous carbon 21 of the second negative electrode layer 2 is 5 µm, (the average particle size of the negative electrode layer solid electrolyte 32) / (the average particle size of the amorphous carbon 21 of the second negative electrode layer 2) is 1/10. Even when the average particle size of the negative electrode layer solid electrolyte 32 is other than 0.5 um or the average particle size of the amorphous carbon 21 of the second negative electrode layer 2 is other than 5 um, (the average particle size of the negative electrode layer solid electrolyte 32) / (the average particle size of the amorphous carbon 21 of the second negative electrode layer 2) is preferably 1/10 or less.

In the present invention, the negative electrode has a two-layer structure, but an energy density of the second negative electrode layer 2 made of a hard carbon as an active material is smaller than the energy density of the first negative electrode layer 1 made of the graphite as the active material. Therefore, when it is desired to increase the energy density of the lithium ion secondary battery, the thickness of the second negative electrode layer 2 using the hard carbon is reduced. In this case, for example, the thickness of the second negative electrode layer 2 is smaller than the thickness of the solid electrolyte layer 3.

In Figures 1 and 2, the positive electrode layer 4 is laminated on the solid electrolyte layer 3. The positive electrode layer 4 used in the present invention is not particularly limited. For example, as the positive electrode active material, LiCoO2 (lithium cobaltate) or LiNiO2 (lithium nickelate) which is a layered rock salt type composite oxide positive electrode material, or LiMn2O4 (lithium manganate) which is a spinel-type composite oxide positive electrode material can be used.

The average particle size of the positive electrode active material is not particularly limited, but is, for example, 0.1 to 50 µm. The thickness of the positive electrode layer is not particularly limited, but is, for example, 0.5 um to 500 um. A positive electrode current collector plate 6 is disposed on the positive electrode layer 4.

Hereinafter, a method of manufacturing the lithium ion secondary battery shown in Figures 1 and 2 and the like will be described in detail. As a material of the negative electrode current collector plate 5, for example, stainless steel, copper, nickel, carbon, etc. can be used. The thickness of the negative electrode current collector plate 5 is, for example, 1 um to 20 um. In Example 1, a stainless steel foil having a thickness of 10 um was used as the negative electrode current collector plate 5.

As a material of the positive electrode current collector plate 6, for example, stainless steel, copper, nickel, titanium, iron, carbon, etc. can be used. The thickness of the positive electrode current collector plate 6 is, for example, 1 um to 20 µm. In Example 1, an aluminum foil having a thickness of 20 um was used as the positive electrode current collector plate 6.

### (First Negative Electrode Layer)

The first negative electrode layer 1 was manufactured as follows. In Example 1, a graphite is used as the crystalline carbon 11 as the active material of the first negative electrode layer 1. The graphite 11, the negative electrode layer solid electrolyte 32, and the binder were mixed, and a solvent was added to form a slurry. The slurry was applied onto the negative electrode current collector plate 5 so as to have a target basis weight. Thereafter, it was dried to evaporate off the solvent, to prepare the first negative electrode layer 1.

In Example 1, the average particle size of graphite as the first negative electrode layer 1 is 16 um. As the negative electrode layer solid electrolyte 32 mixed with the graphite, an Li6PS5Cl based (argyrodite) having the average particle size of 0.5 micrometers was used. In Example 1, the thickness of the first negative electrode layer was 80 µm.

### (Second Negative Electrode Layer)

The second negative electrode layer 2 was also basically formed by the same process as that of the first negative electrode layer 1. In Example 1, a hard carbon is used as the amorphous carbon 21 as the active material of the second negative electrode layer 2. The hard carbon 21, the negative electrode layer solid electrolyte 32, and the binder were mixed, and a solvent was added to prepare a slurry. The slurry was applied onto a PET (Polyethylene Terephthalate) substrate so as to obtain a target basis weight. After that, the second negative electrode layer 2 was formed by drying and evaporating off the solvent.

The average particle size of the hard carbon 21 as the second negative electrode layer 2 is 5 um. As the negative electrode layer solid electrolyte 32 mixed with the hard carbon, an Li6PS5Cl based (argyrodite) having the average particle size of 0.5 um was used as in the first negative electrode layer 1. The thickness of the second negative electrode layer 2 was 12 µm. Although the energy density of the battery can be increased when the second negative electrode layer 2 is thinner, it becomes difficult to form the layer. A ratio of the thickness of the second negative electrode layer 2 (to the total thickness of the first negative electrode layer 1 and the second negative electrode layer 2) is (12 µm) / (92 µm) = 0.13.

### (Lamination of Two-Layer Negative Electrodes)

A laminate in which the first negative electrode layer 1 was formed on the negative electrode current collector plate 5 and a laminate in which the second negative electrode layer 2 was formed on the PET substrate were stacked so that the first negative electrode layer 1 and the second negative electrode layer 2 were opposed to each other, and the second negative electrode layer 2 was bonded on the first negative electrode layer 1 by a roll pressing. Thereafter, the PET substrate was peeled from the second negative electrode layer 2, and a laminate of the first negative electrode layer 1 and the second negative electrode layer 2 was formed on the negative electrode current collector plate 5. Such a lamination method by bonding has an advantage that the first negative electrode layer 1 and the second negative electrode layer 2 can each be formed under optimum conditions.

The structure in which the second negative electrode layer 2 is laminated on the first negative electrode layer 1 can be formed by a method of applying the second negative electrode layer 2 on the first negative electrode layer 1 in addition to the above. That is, the first negative electrode layer 1 is formed on the negative electrode current collector plate 5 as described above, and a slurry for forming the second negative electrode layer 2 is applied thereon, followed by drying, and the second negative electrode layer 2 is laminated on the first negative electrode layer 1.

### (Preparation and Lamination of Solid Electrolyte Layer)

As the solid electrolyte 31 in the solid electrolyte layer 3, a solid electrolyte 31 made of a material of Li6PS5Cl based (argyrodite) is used, but the average particle size is larger than the average particle size of the negative electrode layer solid electrolyte 32. The solid electrolyte 31 and the binder were mixed, and a solvent was added to prepare a slurry. The slurry was applied onto a PET (Polyethylene Terephthalate) substrate. Thereafter, the solution was evaporated off the solvent by drying to form the solid electrolyte layer 3. The thickness of the solid electrolyte layer 3 was 20 um.

A laminate in which the first negative electrode layer 1 and the second negative electrode layer 2 were formed on the negative electrode current collector plate 5 and a laminate in which the solid electrolyte layer 3 was formed on the PET substrate were stacked so that the second negative electrode layer 2 and the solid electrolyte layer 3 were opposed to each other, and the solid electrolyte layer 3 was bonded on the second negative electrode layer 2 by the roll pressing. Thereafter, the PET substrate was peeled from the solid electrolyte layer 3, and a laminate in which the first negative electrode layer 1, the second negative electrode layer 2, and the solid electrolyte layer 3 were formed on the negative electrode current collector plate 5 was prepared.

The structure in which the solid electrolyte layer 3 is laminated on the laminate of the first negative electrode layer 1 and the second negative electrode layer 2 can be formed by a method of coating the solid electrolyte layer 3 on the second negative electrode layer 2 in addition to the above. That is, the first negative electrode layer 1 and the second negative electrode layer 2 are formed on the negative electrode current collector plate 5 as described above, and a slurry for forming the solid electrolyte layer 3 is applied thereon. Thereafter, the solid electrolyte layer 3 is laminated on the second negative electrode layer 2 by drying.

### (Preparation and Lamination of Positive Electrode Layer)

A slurry was prepared by mixing a positive electrode active material, a solid electrolyte, and a binder, and adding a solvent. The slurry was applied onto the positive electrode current collector plate 6 so as to have a target basis weight. Thereafter, the solvent was evaporated off by drying to form the positive electrode layer 4. As the positive electrode active material, LiNi_{0.5}C_{0.2}Mn_{0.3} (lithium-nickel-cobalt-manganese oxide) which is a layered rock salt type composite oxide positive electrode material having the average particle size of 4 um was used. In Example 1, the thickness of the positive electrode layer 4 was 80 µm.

A laminate in which the first negative electrode layer 1, the second negative electrode layer 2, and the solid electrolyte layer 3 were formed on the negative electrode current collector plate 5 and a laminate in which the positive electrode layer 4 was formed on the positive electrode current collector plate 6 were stacked so that the positive electrode layer 4 and the solid electrolyte layer 3 were opposed to each other, and the positive electrode layer 4 was bonded on the solid electrolyte layer 3 by the roll pressing. The lithium ion secondary battery of Example 1 is manufactured by the above-described process.

In the laminate thus formed, a relation is satisfied that (the average particle size of the crystalline carbon 11 as the active material of the first negative electrode layer 1) > (the average particle size of the amorphous carbon 21 as the active material of the second negative electrode layer 2) > (the average particle size of the negative electrode layer solid electrolyte 32 mixed with the first negative electrode layer and the second negative electrode layer). Furthermore, a relation is satisfied that (the average particle size of the solid electrolyte 31 constituting the solid electrolyte layer 3) > (the average particle size of the negative electrode layer solid electrolyte 32 mixed with the first negative electrode layer 1 and the second negative electrode layer 2).

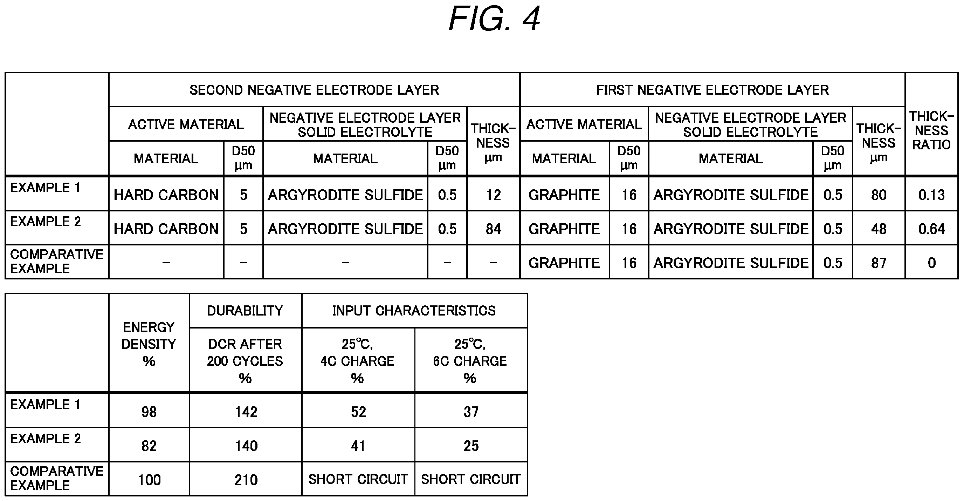

Among the configurations of Example 1 described above, the configuration of the first negative electrode layer 1 and the second negative electrode layer 2 are described at a row of the Example 1 in a table of the upper side of Figure 4. Incidentally, the upper side of Figure 4 is an example of physical configurations of the first negative electrode layer 1 and the second negative electrode layer 2 in Example 1, Example 2, and Comparative Example. A table of the lower side of Figure 4 shows the characteristics of Example 1, Example 2, and Comparative Example. The characteristic comparison will be described later.

### Example 2

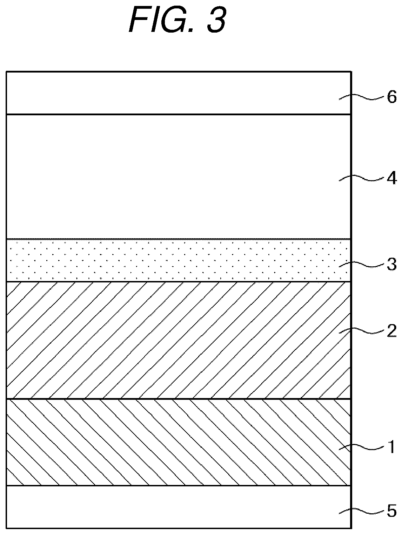

Figure 3 is a cross-sectional view of a lithium ion secondary battery which is a solid electrolyte battery according to Example 2. Specific materials of the first negative electrode layer 1, the second negative electrode layer 2, the solid electrolyte layer 3, and the positive electrode layer 4 in Example 2 are the same as those in Example 1. The difference between Example 2 and Example 1 is the thickness of each layer. The thickness of the first negative electrode layer 1 in Example 2 is 48 um, and the thickness of the second negative electrode layer 2 is 84 um. On the other hand, in Example 1, the thickness of the first negative electrode layer 1 is 80 um, and the thickness of the second negative electrode layer 2 is 12 um. Therefore, in Example 2, the influence of the second negative electrode layer 2 using the hard carbon 21 as the active material becomes more remarkable. The ratio of the thickness of the second negative electrode layer 2 to the total thickness of the first negative electrode layer 1 and the second negative electrode layer 2 is (84 µm) / (132 µm) = 0.64.

In Example 2, the total thickness of the first negative electrode layer 1 and the second negative electrode layer 2 is larger than that of Example 1. However, the following relation is also satisfied in Example 2. That is, (the average particle size of the crystalline carbon 11 as the active material of the first negative electrode layer 1) > (the average particle size of the amorphous carbon 21 as the active material of the second negative electrode layer 2) > (the average particle size of the negative electrode layer solid electrolyte 32 mixed with the first negative electrode layer 1 and the second negative electrode layer 2). Further, a relation is satisfied that (the average particle size of the solid electrolyte 31 constituting the solid electrolyte layer 3) > (the average particle size of the negative electrode layer solid electrolyte 32 mixed with the first negative electrode layer 1 and the second negative electrode layer 2).

Further, in addition to the above-described configuration, also in Example 2, by adopting the following configuration, it is possible to obtain effects such as suppression of increase in the battery resistance after the charge-discharge cycle and suppression of generation of the lithium dendrite in the rapid charging, as described in Example 1. That is, in the first configuration, the average particle size of the negative electrode layer solid electrolyte 32 of the first negative electrode layer 1 is smaller than the average particle size of the crystalline carbon 11, and is preferably 1/10 or less. In the second configuration, the average particle size of the negative electrode layer solid electrolyte 32 of the second negative electrode layer 2 is smaller than the average particle size of the amorphous carbon 21, and is preferably 1/10 or less. The third configuration is that the average particle size of the negative electrode layer solid electrolyte 32 of the second negative electrode layer 2 is smaller than the average particle size of the negative electrode layer solid electrolyte 32 of the first negative electrode layer 1. The fourth configuration is that the average particle size of the negative electrode layer solid electrolyte 32 of the second negative electrode layer 2 is smaller than the average particle size of the negative electrode layer solid electrolyte 32 of the first negative electrode layer 1.

The manufacturing method of each layer such as the first negative electrode layer 1, the second negative electrode layer 2, the solid electrolyte layer 3, and the positive electrode layer 4 is also the same as that of Example 1. In the configuration of Example 2, the configurations of the first negative electrode layer 1 and the second negative electrode layer 2 are described at a row of Example 2 in the table of the upper side of Figure 4. The table of the lower side of Figure 4 shows the properties of Example 1, Example 2, and Comparative Example. The characteristic comparison will be described later.

### Comparative Example 1

In the Comparative Example, the negative electrode layer is formed of one layer, as in the prior art. As the active material of the negative electrode layer, a graphite which is crystalline carbon 11 is used. The average particle size of the graphite is, for example, 16 um. The thickness of the negative electrode layer is 87 µm. The method of forming the negative electrode layer is the same as that described in the method of manufacturing the first negative electrode layer 1 of Example 1. The structure and the lamination method of the solid electrolyte layer 3 and the positive electrode layer 4 are also the same as those described in Example 1.

### Evaluation Result 1

Figure 4 is a table comparing Example 1, Example 2, and Comparative Example, and the table of the upper side is a table comparing the configurations of the first negative electrode layer 1 and the second negative electrode layer 2 in each of the examples described above. Since the negative electrode layer of the Comparative Example is one layer and has the same structure as the first negative electrode layer, it is described in the column of the first negative electrode layer. The thickness ratio of the right end of the upper side is (thickness of the second negative electrode layer) / ((thickness of the first negative electrode layer) + (thickness of the second negative electrode layer)).

The table of the lower side of Figure 4 compares the performance of the lithium ion secondary batteries according to Example 1, Example 2, and Comparative Example. Performance comparisons of the lithium ion secondary batteries are compared in terms of energy density (%), durability, and input characteristics.

The energy density of the battery is higher when the graphite is used as the negative electrode than when the hard carbon is used. Therefore, concerning the energy density, that of the Comparative Example is the largest. In the table of the lower side of Figure 4, a numerical value (%) in the column of the energy density indicates the energy density of Examples 1 and 2 when the energy density in the Comparative Example is set to 100.

The durability was evaluated by a rate of increase (%) of the change in the Direct Current Resistance (DCR) after 200 cycles of the cycle test. The smaller the increase in the DCR, the better. In the Comparative Example, the DCR is 210 % after 200 cycles, whereas it is 142 % in Example 1 and it is 140 % in Example 2, excellent results are provided in the present invention.

The input-characteristics are evaluated at 25 °C using the discharge capacity at 0.1C as a denominator and the charge capacity ratio that reached 4.35 V at 4C, 6C charge. Here, 0.1C means that the battery is fully charged for 10 hours after being completely discharged. 4C means that the battery is fully charged for 1/4 hour after being completely discharged.

In Example 1, it is 52 % in the 4C charge and it is 37 % in the 6C charge. In Example 2, it is 41 % in the 4C charge and it is 25 % in the 6C charge. In contrast, in the Comparative Example, the Li dendrites were precipitated during the charge, and the negative electrode and the positive electrode were shortcircuited, so that the electric potential did not reach 4.35 V.

As described above, according to the present invention, it is possible to realize a highly reliable lithium ion secondary battery having an excellent durability. In addition, according to the present invention, the precipitation of the Li dendrites can be suppressed. Therefore, a rigidity of a jig (metal plate) for confining the housing can be lowered, and the weight of the battery can be reduced. The detailed reason is as follows.

That is, the solid electrolyte battery including the laminate as described above can suppress the increase in the resistance after the charge-discharge cycle. Further, in addition to at least the above-described effects, a lithium deposition during a high-rate charging can be suppressed. As a result, effects such as suppression of the short circuit and reduction of the confining pressure of the battery are obtained. For example, in the solid electrolyte battery, in order to suppress the possibility that the lithium dendrite is deposited in a gap during the high-rate charging and an internal short circuit of the battery occurs, it is conceivable that the battery is sandwiched between the metal plates and is confined from the outside. In this case, it is necessary to increase the rigidity of the metal plates as the confining pressure becomes higher. Therefore, it is important to prevent the decrease in the energy density due to an increase in weight and volume of the metal plates. The present solid electrolyte battery can reduce the confining pressure.

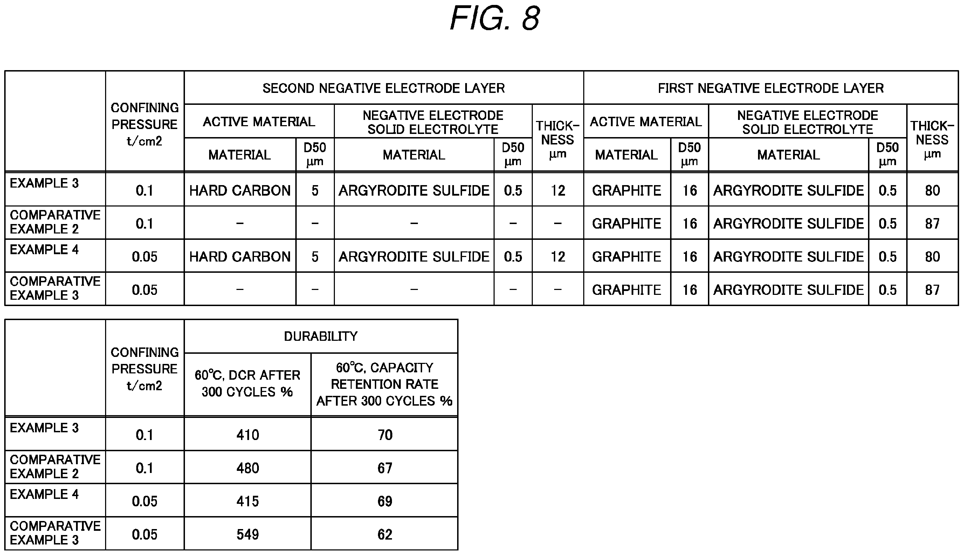

Examples 3 and 4 shown below are configurations in which a confining pressure is applied to the solid electrolyte battery of Example 1. In addition, Comparative Example 2 and Comparative Example 3 are structural examples in which a confining pressure is applied to the solid electrolyte battery according to Comparative Example 1. Figure 8 is a table comparing the durability of the batteries in the configurations of Examples 3 and 4 and the configurations of Comparative Examples 2 and 3.

### Example 3

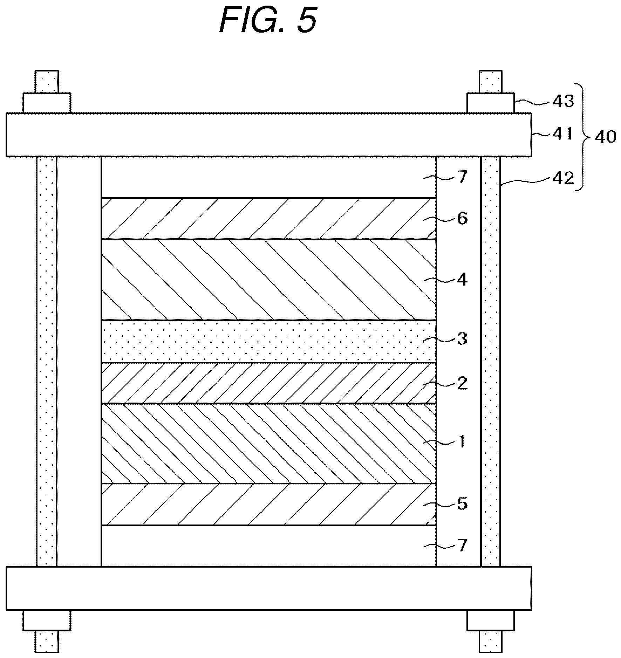

Figure 5 is a cross-sectional view of a solid electrolyte battery according to Example 3. Figure 5 is a cross-sectional view showing a state in which pressure is applied to the solid electrolyte battery of Example 1 using the confining member 40. The cross-section of Figure 5 is a schematic cross-sectional view for providing an image of the confining pressure. That is, in the actual solid electrolyte battery, the configurations of the first to sixth layers shown in Example 1 are wound in multiple layers with an insulating sheet interposed therebetween, and are accommodated in the battery case. Then, pressing is received from the outside of the battery case, for example, using a support plate etc. shown in Figure 5. The same applies to Example 4 and Comparative Examples 2 and 3.

In Figure 5, the first negative electrode layer 1, the second negative electrode layer 2, the solid electrolyte layer 3, and the positive electrode layer 4 are sandwiched between the negative electrode current collector plate 5 and the positive electrode current collector plate 6. As described in Example 1, the negative electrode solid electrolyte 32 is mixed with the first negative electrode layer 1, the second negative electrode layer 2, and the solid electrolyte layer 3. In Figure 5, the confining member 40 includes a support plate 41, a bolt 42, and a nut 43 that sandwich the solid electrolyte battery from above and below via the insulating sheets 7. In Figure 5, the upper and lower support plates 41 are fastened by the long bolts 42 and the nuts 43, and the confining pressure is applied to the solid electrolyte battery.

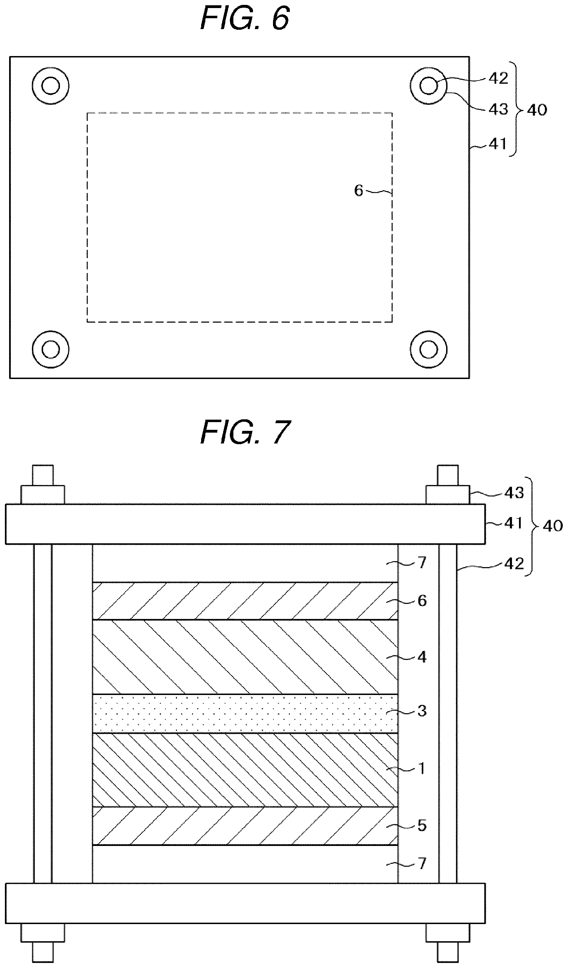

Figure 6 is a top plan view of Figure 5. The bolts 42 and a nuts 43 for fastening the upper and lower support plates 41 are arranged at four corners of the support plates 41. Since the support plates 41 apply the pressure to the solid electrolyte battery from above and below, a certain degree of rigidity is required. For example, an SUS having a thickness of about 10 mm is used. However, since the energy density of the battery is counted including the confining member 40, the weight of the confining member 40 should be as small as possible. However, if the confining pressure is small, the durability of the battery cannot be ensured.

In Example 3, since the solid electrolyte battery of Example 1 according to the present invention is used, the confining pressure can be reduced. The confining pressure in Example 3 is 0.1 t/cm². t is tons. The durability of the solid electrolyte batteries at this time was evaluated by the DCR (%) and a capacity retention rate (%) after 300 cycles at 60 °C. The results are shown in Figure 8, which shows better durability than the Comparative Example. Details of Figure 8 will be described later.

### Example 4

The structure of Example 4 is the same as that of Example 3. That is, as shown in Figures 5 and 6, the solid electrolyte battery of Example 1 is fastened by the confining member 40 to put the confining pressure on the battery. The confining pressure in Example 4 is 0.05 t/cm² smaller than in Example 3. Figure 8 shows the durability of the solid electrolyte battery in this case. Although details of Figure 8 will be described later, the present example also shows superior durability to the Comparative Example.

### Comparative Example 2

Figure 7 is a cross-sectional view of a solid electrolyte battery according to Comparative Example 2. Figure 7 is a cross-sectional view showing a state in which pressure is applied to the solid electrolyte battery of Comparative Example 1 by using the confining member 40 via the insulating sheets 7. The cross-section of Figure 7 is a schematic cross-sectional view for providing an image of the confining pressure. As shown in Figure 7, in Comparative Example 1 and Comparative Example 2, the second negative electrode layer is not present. A plan view of Figure 7 as viewed from above is the same as Figure 6. The confining pressure in Comparative Example 1 is the same as that in Example 3, and is 0.1 t/cm². Figure 8 shows the durability of the solid electrolyte battery in this case. Details of Figure 8 will be described later.

### Comparative Example 3

The structure of Comparative Example 3 is the same as that of Comparative Example 2. That is, as shown in Figure 7, the solid electrolyte battery of Comparative Example 1 is fastened by the confining member 40 and the confining pressure is applied. The confining pressure in Comparative Example 3 is 0.05 t/cm² smaller than that in Comparative Example 2. Figure 8 shows the durability of the solid electrolyte battery in this case.

### Evaluation Result 2

Figure 8 is a table comparing Example 3, Example 4, Comparative Example 2, and Comparative Example 3, and a table of the upper side is a table showing the configurations of the Examples and Comparative Examples described above. In addition, the negative electrode layers of Comparative Example 2 and Comparative Example 3 are only one layer and have the same configurations as the first negative electrode layer, and thus are described in the column of the first negative electrode layer. The confining pressure (sometimes referred to as the confining pressure) in Example 3 and Comparative Example 2 is 0.1 t/cm², and the confining pressure in Example 4 and Comparative Example 3 is 0.05 t/cm².

A table of the lower side of Figure 8 compares the durability of the solid electrolyte batteries according to Example 3, Example 4, Comparative Example 2, and Comparative Example 2. The durability is evaluated by the change (%) of the Direct Current Resistance (DCR) after 300 cycles at 60 °C, and the capacity retention rate (%). In the cycling test, the battery is charged at a charging current 1C and then left for 30 minutes, and then the battery is discharged at a discharging current 1C, for example. After that, the battery is left for 30 minutes and charged with the charging current 1C again. Incidentally, the voltage between terminals when the solid electrolyte batteries used in this cycling test are fully charged is 4.35 V, and the voltage between terminals when the solid electrolyte batteries are completely discharged is 3 V. Figure 8 shows a comparison of the change in an initial Direct Current Resistance and the change in the capacity by repeating this process 300 times in an environment of 60 °C. In addition, the capacity retention rate after 300 cycles may be expressed as comparison of the discharge ability in the three hundredth cycle to the discharge ability in the first cycle in other words.

In Figure 8, when compared at the same confining pressure (0.1 t/cm²), both of the DCR and the capacity retention rate of Example 3 are also improved in comparison with Comparative Example 2. Further, when compared with the same confining pressure (0.05 t/cm²), both of the DCR and the capacity retention rate of Example 4 are also improved than those of Comparative Example 3. Therefore, the effect on the durability by the configuration of the present invention is sufficiently recognized.

In more detailed consideration of Figure 8, it can be said that the effect of the present invention is more remarkable in configuration of the confining pressure (0.05 t/cm²) than in configuration of the confining pressure (0.1 t/cm²). That is, in the DCR, when the confining pressure (0.1 t/cm²) is compared with Example 3 and Comparative Example 2, in Example 3, 410/480 = 0.854, i.e., 14.6 % improvement is obtained from Comparative Example 2. On the other hand, when the DCR of Example 4 and Comparative Example 3 are compared with each other in the case of the confining pressure (0.05 t/cm²), 415/549 = 0.756, that is, 24.4 % improvement is obtained in Example 4 compared with Comparative Example 3.

On the other hand, for the capacity retention rate, when the confining pressure (0.1 t/cm²) is compared between Example 3 and Comparative Example 2, in Example 3, 70/67 = 1.045, i.e., 4.5 % improved than in Comparative Example 2. On the other hand, when the capacity retention rate of Example 4 and Comparative Example 3 is compared in the case of the confining pressure (0.05 t/cm²), in Example 4, 69/62 = 01.113, that is, 11.3 % improvement is obtained from Comparative Example 3. As described above, the result shown in Figure 8 shows the effect of the present invention in that degradation of the durability can be suppressed even if the confining pressure is reduced according to the configuration of the present invention.

From the results of Figure 8, it can be said that the present invention is significantly different from the Comparative Examples in both cases where the confining pressure is (0.1 t/cm²) and (0.05 t/cm²), and thus is effective. In Figure 8, considering the case where the confining pressure is (0.1 t/cm²), it can be reasonably estimated that even when the confining pressure is (0.11 t/cm²), a significant difference can be maintained for the Comparative Example. In Figure 8, considering the case where the confining pressure is (0.05 t/cm²), it can be reasonably estimated that even when the confining pressure is (0.04 t/cm²), a significant difference can be maintained for the Comparative Example. That is, it can be reasonably estimated that the confining pressure (0.11 t/cm²) to (0.04 t/cm²) can be sufficiently effective by using the configuration of the solid electrolyte battery of the present invention.

Incidentally, when the confining pressure is increased, the durability of the solid electrolyte battery can be improved. However, when the confining pressure is increased, it is necessary to increase the thickness of the support plate, and thus the energy efficiency of the solid electrolyte battery is lowered. A feature of the present invention is that it is possible to prevent a decrease in the durability even if the confining pressure is reduced. Referring to Figure 8, according to the present invention, the change in the DCR is 410 (%) to 415 (%) even when the confining pressure changes from (0.1 t/cm²) to (0.05 t/cm²), and is slight. In addition, according to the present invention, the change in the capacity retention rate is as small as 70 (%) to 69 (%) even when the confining pressure changes from (0.1 t/cm²) to (0.05 t/cm²). In view of the above, it can be reasonably estimated that the durability of the solid electrolyte batteries can be maintained at a practical stage even if the confining pressure is as low as (0.01 t/cm²) by using the inventive configuration.

In the above Example, an example has been described in which the graphite is used as the crystalline carbon 11 in the active material of the first negative electrode layer 1, the hard carbon is used as the crystalline carbon 11 in the active material of the second negative electrode layer 2, an Li6PS5Cl based (argyrodite) is used as the negative electrode layer solid electrolyte 32 mixed with the first negative electrode layer 1 and the second negative electrode layer, and a Li6PS5Cl based (argyrodite) is used as the solid electrolyte 31 of the solid electrolyte layer 3. However, the present invention is not limited thereto, and other crystalline carbon, amorphous carbon, and solid electrolyte may be used. Alternatively, the first negative electrode layer or the second negative electrode layer may contain these crystalline carbon or amorphous carbon as a main component, for example, and may further contain a known active material.

### Reference Signs List

- 1: first negative electrode layer
- 2: second negative electrode layer
- 3: solid electrolyte layer
- 4: positive electrode layer
- 5: negative electrode current collector plate
- 6: positive electrode current collector plate
- 7: insulating sheet
- 11: crystalline carbon
- 12: amorphous carbon
- 31: solid electrolyte
- 32: negative electrode layer solid electrolyte
- 40: confining member
- 41: support plate
- 42: bolt
- 42: nut

## Claims

1. A solid electrolyte battery, in which a positive electrode layer, a negative electrode layer, and a solid electrolyte layer between the positive electrode layer and the negative electrode layer are formed,
the solid electrolyte battery being **characterized in that**:
the negative electrode layer includes a first negative electrode layer, and a second negative electrode layer which is laminated on the first negative electrode layer and is in contact with the solid electrolyte layer,
wherein an active material of the first negative electrode layer is a crystalline carbon,
an active material of the second negative electrode layer is an amorphous carbon,
a negative electrode layer solid electrolyte is mixed into the first negative electrode layer and the second negative electrode, and
(an average particle size (D50) of the negative electrode layer solid electrolyte) < (the average particle size (D50) of the amorphous carbon) < (the average particle size (D50) of the crystalline carbon) is satisfied.

2. The solid electrolyte battery according to claim 1,
wherein the average particle size (D50) of the negative electrode layer solid electrolyte is 1/10 or smaller than the average particle size (D50) of the amorphous carbon of the second negative electrode layer.

3. The solid electrolyte battery according to claim 1,
wherein a thickness of the second negative electrode layer is smaller than the thickness of the first negative electrode layer.

4. The solid electrolyte battery according to claim 1,
wherein a thickness of the second negative electrode layer is 12 um or smaller.

5. The solid electrolyte battery according to claim 1,
wherein the crystalline carbon is a graphite, and
the amorphous carbon is a hard carbon or a soft carbon.

6. The solid electrolyte battery according to claim 1,
wherein the solid electrolyte layer is composed of a solid electrolyte,
the average particle size (D50) of the negative electrode layer solid electrolyte is smaller than the average particle size (D50) of the solid electrolyte.

7. The solid electrolyte battery according to claim 1,
wherein a solid electrolyte of the solid electrolyte layer and the negative electrode layer solid electrolyte are formed of a sulfide solid electrolyte.

8. The solid electrolyte battery according to claim 1,
wherein the solid electrolyte of the solid electrolyte layer and the negative electrode layer solid electrolyte are made of an Li6PS5Cl-based (argyrodite).

9. A solid electrolyte battery, in which a positive electrode layer, a negative electrode layer, and a solid electrolyte layer between the positive electrode layer and the negative electrode layer are formed,
the solid electrolyte battery being **characterized in that**:
the negative electrode layer includes a first negative electrode layer, and a second negative electrode layer which is laminated on the first negative electrode layer and is in contact with the solid electrolyte layer,
wherein an active material of the first negative electrode layer is a crystalline carbon,
wherein an active material of the second negative electrode layer is an amorphous carbon,
a negative electrode layer solid electrolyte is mixed into the first negative electrode layer and the second negative electrode,
(an average particle size (D50) of the negative electrode layer solid electrolyte) < (the average particle size (D50) of the amorphous carbon) < (the average particle size (D50) of the crystalline carbon) is satisfied,
a negative electrode current collector plate is laminated on an outside of the negative electrode layer,
a positive electrode current collector plate is laminated on an outside of the positive electrode layer,
a first support plate is laminated on an outside of the negative electrode current collector plate,
a second support plate is laminated on an outside of the positive electrode current collector plate, and
a pressure is applied to the solid electrolyte battery such that a confining pressure becomes (0.11 t/cm²) to (0.01 t/cm²) by being sandwiched between the first support plate and the second support plate.

10. The solid electrolyte battery according to claim 9,
wherein the pressure is applied to the solid electrolyte battery such that the confining pressure becomes (0.11 t/cm²) to (0.04 t/cm²) by being sandwiched between the first support plate and the second support plate.

11. A method for producing a solid electrolyte battery, in which a positive electrode layer, a negative electrode layer, and a solid electrolyte layer between the positive electrode layer and the negative electrode layer are formed,
the solid electrolyte battery being **characterized in that**:
the negative electrode layer includes a first negative electrode layer, and a second negative electrode layer which is laminated on the first negative electrode layer and is in contact with the solid electrolyte layer,
wherein an active material of the first negative electrode layer is a crystalline carbon,
an active material of the second negative electrode layer is an amorphous carbon,
a negative electrode layer solid electrolyte is mixed into the first negative electrode layer and the second negative electrode, and
(an average particle size (D50) of the negative electrode layer solid electrolyte) < (the average particle size (D50) of the amorphous carbon) < (the average particle size (D50) of the crystalline carbon) is satisfied,
the method comprising the steps of:
laminating a negative electrode current collector plate on an outside of the negative electrode layer,
laminating a positive electrode current collector plate on an outside of the positive electrode layer,
laminating a first support plate on an outside of the negative electrode current collector plate,
laminating a second support plate on an outside of the positive electrode current collector plate,
pressing the solid electrolyte battery between the first support plate and the second support plate,
arranging chargeably the solid electrolyte battery to the charging device of the battery,
charging to the arranged solid electrolyte battery by the charging device,
in the step of charging, the pressure is applied to the solid electrolyte battery, the pressure being (0.11 t/cm²) to (0.01 t/cm²).
